# EUROPÄISCHE PATENTANMELDUNG

(11) **EP 2 857 094 A1**
(43) Veröffentlichungstag der Anmeldung: **08.04.2015**
(21) Anmeldenummer: 13185875.5
(22) Anmeldetag: 25.09.2013
(51) Int. Cl.: B01J 19/32, F28F 25/08

(54) **Einbau, Verfahren und Verwendung in einem Kühlturm**

(71) Anmelder: Siemens Aktiengesellschaft, 80333 München (DE)
(72) Erfinder: Weber, Jörg, 63329 Egelsbach (DE); Welde, Detlef, 63571 Gelnhausen (DE)

(57) **Zusammenfassung**

Die Erfindung betrifft einen Einbau (210,220,230) für den Einsatz in einem Feucht-/Nassbereich einer Wärmeaustauschanlage und/oder einer Stoffaustauschanlage, umfassend eine Oberfläche, wobei zumindest die Oberfläche zumindest teilweise Kunststoff umfasst und wobei der Einbau (210, 220,230) in einer Kraftwerksanlage vorgesehen ist, wobei die Oberfläche zumindest teilweise durch Oxyfluorination verändert ist, so dass ihre Benetzbarkeit verbessert ist.

Ferner betrifft die Erfindung ein Verfahren zur Herstellung einer zumindest teilweise Kunststoff umfassenden Oberfläche eines Einbaus und die Verwendung.

## Beschreibung

Die vorliegende Erfindung betrifft einen Einbau für den Einsatz in einem Feucht-/Nassbereich einer Wärmeaustauschanlage und/oder einer Stoffaustauschanlage sowie ein Verfahren zur Herstellung einer zumindest teilweise Kunststoff umfassenden Oberfläche eines Einbaus und eine Verwendung.

Insbesondere in Kraftwerken gibt es solche Wärmeaustauschanlagen bzw. Stoffaustauschanlagen. Zu nennen sind hier nicht abschließend z.B. Absorber/Desorber, Quenchvorrichtungen und Kühltürme.

Zur Abscheidung von Kohlendioxid aus dem Rauchgas einer Verbrennungsanlage wird das Rauchgas in die CO₂- Abscheidevorrichtung weitergeleitet. Hierzu wird das Rauchgas dem Absorber über eine Rauchgasleitung zugeführt. Die CO₂-Abscheidevorrichtung umfasst einen Absorber und einen strömungstechnisch mit diesem verbundenen Desorber.Das Abgas kann auch durch direkte Eindüsung von Wasser gekühlt und gereinigt werden. Dieses Verfahren wird als Quenche in einer sogenannten Quenchvorrichtung bezeichnet.

Kühltürme werden in verschiedenen technischen Bereichen zur Kühlung von Kühlwasser genutzt. Das bei der Kühlung eines Prozesses erwärmte Kühlwasser wird in den Kühlturm hineingeleitet und durch zahlreiche Öffnungen eines Leitungssystems, beispielsweise mit Hilfe von Spritzaggregaten oder Düsen, gleichmäßig im Inneren des Kühlturms verteilt. Das zu kühlende Wasser rieselt dabei von oben auf sogenannte Einbauten herab und rieselt langsam durch diese hindurch. Zur Kühlung des Wassers benutzte Kühlluft wird entgegengesetzt durch den Kühlturm gefördert. Das Wasser gibt durch Verdunstung und Konvektion Wärme an die durch den Kühlturm geleitete Luft ab. Das auf diese Weise gekühlte Wasser sammelt sich unterhalb der Einbauten und wird durch Sammler und Rohrleitungen aus dem Kühlturm herausgeführt. Das gekühlte Wasser wird für ein erneutes Kühlen des Prozesses genutzt, wobei Verdampfungsverluste durch die Kühlung im Kühlturm durch Frischwasser aufgefüllt werden. Dabei wird das Wasser erneut erwärmt und einer erneuten Kühlung im Kühlturm zugeführt. Auf diese Art und Weise lässt sich die für die Kühlung eines Prozesses benötigte Kühlwassermenge minimieren.

Bei Kühltürmen oder Absorbern/Desorbern, Quenchvorrichtungen wird die Wärme über Wärme-/Stoffaustauscher durch Konvektion an die Luft abgegeben. Zur Unterstützung der Konvektion enthalten die Wärme-/Stoffaustauscher Einbauten. Einbauten für Kühltürme oder Absorbern/Desorbern sind in diversen Ausgestaltungen bekannt. Ausschlaggebend für Einbauten ist beispielsweise einerseits eine gewisse Verwirbelung und Führung des Kühlmediums, beispielsweise Luft, und andererseits eine relativ große Verweildauer und Oberfläche des zu kühlenden Fluids, wie beispielsweise Wasser. Bei den Einbauten können beispielsweise gewellte Kunststofffolienpakete oder Pakete aus gewellten Kunststoffgittermatten eingesetzt werden, durch die das oben in den Kühlturm eingesprühte zu kühlende Fluid, nämlich Wasser, tropfenförmig nach unten hindurch tritt und an den Folien oder Gitterstäben unter Vergrößerung seiner Fläche entlang strömt. Dadurch wird es gekühlt.

Von entscheidender Bedeutung für einen problemlosen Betrieb z.B. eines Kühlturms oder der Quenchvorrichtung ist, dass das Wasser im Inneren möglichst gleichmäßig und langsam durchrieselt und so möglichst viel Wärme an die Kühlluft abgeben kann. Verschmutzungen behindern die gleichmäßige Verteilung und das langsame Durchrieseln des Wassers. Durch die feuchten und warmen Bedingungen, insbesondere im Inneren, wird nämlich nachteilig die Bildung von Mikroorganismen, z. B. Algen und/oder Pilzen, gefördert. Um einen störungsfreien und effektiven Betrieb zu gewährleisten, ist es daher erforderlich, die im Inneren befindlichen Einbauten zu reinigen, da ein Verstopfen durch an den Einbauten wachsenden Mikroorganismen zumindest eine verminderte Kühlwirkung verursachen würde. Solche Reinigungsarbeiten verursachen nachteilig hohe Kosten und erfordern außerdem eine Unterbrechung des Betriebs.

Eine erste Aufgabe der Erfindung ist die Angabe eines verbesserten Einbaus für den Einsatz in einer Wärmeaustauschanlage und/oder Stoffaustauschanlage. Eine zweite Aufgabe ist die Angabe eines Verfahrens zur Herstellung einer zumindest teilweise Kunststoff umfassenden Oberfläche eines solchen Einbaus. Eine dritte Aufgabe ist die Angabe einer Verwendung.

Erfindungsgemäß wird die erste Aufgabe durch die Angabe eines Einbaus für den Einsatz in einem Feucht-/Nassbereich einer Wärmeaustauschanlage und/oder einer Stoffaustauschanlage gelöst, umfassend eine Oberfläche, wobei zumindest die Oberfläche zumindest teilweise Kunststoff umfasst und wobei der Einbau in einer Kraftwerksanlage vorgesehen ist, und wobei die Oberfläche zumindest teilweise durch Oxyfluorination verändert ist, so dass ihre Benetzbarkeit verbessert ist.

Erfindungsgemäß wurde erkannt, dass solche Einbauten in Kraftwerken, insbesondere aus dem Kunststoff PVC, ihre vollen thermischen Eigenschaften erst nach einer Einlaufzeit von ca. 2-3 Monaten entfalten. Dies kann zum einen aus einem Reinigungseffekt resultieren, wodurch durch den Fertigungsprozess bedingte vorhandene Rückstände in einem fabrikneuen Einbau entfernt werden. Dies können beispielsweise Fette sein. Auch kann zum anderen jedoch eine Belagbildung ursächlich sein. Bisher gab es keine Lösung für dieses Problem, d.h. die Einbauten wurden daher diesen Einlaufzeiten unterworfen. Hier greift nun die Erfindung ein. Es wurde erkannt, dass Einbauten, insbesondere aus dem Kunststoff PVC oder mit einer Oberfläche aus dem Kunststoff PVC, sich durch eine schlechte Benetzbarkeit auszeichnen. Mit der Oxyfluorination lässt sich dieses Problem jedoch ausgleichen. In nur einem Arbeitsgang, ohne mechanische Belastung, wird die Oberflächenspannung signifikant erhöht. Diese Behandlung bewirkt eine nachhaltige Oberflächenveredelung durch Erhöhung der Benetzbarkeit, welche jedoch die mechanischen Eigenschaften des Werkstoffes nicht beeinflusst. Dadurch ist nun kein Einlaufen wie im Stand der Technik mehr notwendig. Die thermodynamischen Eigenschaften des erfindungsgemäßen Einbaus gegenüber herkömmlich gealtertem Einbau im Stand der Technik sind zudem nachhaltig verbessert. Der erfindungsgemäße Einbau zeigt deutlich verbesserte thermische Betriebseigenschaften gegenüber einem fabrikneuen Einbau. Die Oberflächenstruktur des Einbaus und deren Eigenschaften werden durch die Oxyfluorination verändert und zwar so, dass die Benetzbarkeit verbessert wird. In fluorhaltiger Atmosphäre findet dabei ein Austausch von Atomen statt. Dabei werden Wasserstoffatome im Kunststoff durch Fluor und teilweise auch durch Sauerstoffatome ersetzt. Die Oberfläche erhält durch diese Behandlung neue Eigenschaften, die sich nicht nur auf die Benetzungsfähigkeit des Einbaus positiv auswirken. Die Oberfläche der Einbauten weist nun weiterhin eine geringe Permeabilität von verschiedenen Lösungsmitteln oder Gasen, niedrigem Reibungs-Koeffizient und hohe Resistenz gegenüber aggressiven Chemikalien auf. Der Kunststoff gewinnt dadurch hochwertige Vorteile. Im Gegensatz zu anderen Oberflächenvorbehandlungsverfahren führt die Oxyfluorination zu dauerhaft beständigen sowie gleichmäßigen Oberflächeneigenschaften, welche unabhängig von der Geometrie des Einbaus sind. Durch den erfindungsgemäßen Einbau wird aufgrund der veränderten Oberfläche die chemische und/oder biologische Belagbildung, das sogenannte Makrofouling oder Mikrofouling, reduziert. Makro-/Mikrofouling wird verursacht durch beispielsweise Stoffe biologischen Ursprungs, welche beispielsweise bei Kühltürmen durch den Wind in den Kühlturm gelangen, oder es lösen sich manchmal Teile der Einbauten. Durch Wegfallen dieses Makro-/Mikrofoulings ergeben sich hinsichtlich der Fahrweise bzw. der Langzeitbetriebsweise wesentliche Vorteile.

Durch den erfindungsgemäßen Einbau sind Kostenvorteile möglich, die von einer Reduzierung des notwendigen Einbauvolumens bis hin zu Grössenreduzierung von ganzen Wärme-/Stoffaustauschanlagen reichen können. Ist die Wärme- bzw. Stoffaustauschanlage beispielsweise in einem Kühlturm mit Naturzug, oder einer Quenchvorrichtung so können hierdurch - durch die damit verbundene Verkleinerung des Einbaus und des Kühlturms- enorme Kostenreduktionen möglich sein.

Auch beim Nachrüsten von bestehenden Kraftwerksanlagen können hierdurch Steigerungen der Betriebseigenschaften verbunden sein, die mit herkömmlichen Einbauten nicht erzielbar sind. Weiterhin ist nach Wiederinbetriebnahme sofort die volle Leistung verfügbar, und nicht erst nach einer langen Einlaufzeit.

Selbstverständlich kann die gesamte Wärme-/ Stoffaustauschanlage als ein solcher Einbau ausgestaltet sein.

Vorteilhafterweise ist der Einbau von einer Flüssigkeit umströmbar. Dies umfasst bevorzugt Wasser, welches für den Sekundärkreislauf eines Kraftwerkes vorgesehen ist.

In bevorzugter Ausgestaltung ist der Einbau in einem Kühlturm, insbesondere in dem Kühlturm eines Kraftwerks vorgesehen. Bevorzugt ist der Kühlturm ein Trockenkühlturm oder Nasskühlturm oder Hybridkühlturm. Diese sind besonders bei Wärmekraftwerken einsetzbar.

Bevorzugt umfasst der Kunststoff Polyvinylchlorid (PVC). Dieses Material eignet sich besonders gut für den Einsatz in der Wärme-/Stoffaustauschanlage, insbesondere in einem Wärmekraftwerk.

Bevorzugt ist der Einbau in einem Absorber und/oder Desorber und/oder Quenchvorrichtung vorgesehen. Bevorzugt ist der Einbau bzw. die Wärmetauschanlage und/oder Stoffaustauschanlage einer Anlage zur CO₂ - Abscheidung angeordnet.

Die zweite Aufgabe wird gelöst durch die Angabe eines Verfahrens zur Herstellung einer zumindest teilweise Kunststoff umfassenden Oberfläche eines Einbaus für eine Verwendung in einem Feucht-/Nassbereich einer Wärmeaustauschanlage und/oder einer Stoffaustauschanlage, wobei sich der Einbau in einer Kraftwerksanlage befindet, und wobei die Oberfläche vor einer Montage in die Wärmeaustauschanlage und/oder Stoffaustauschanlage oder während des Betriebs der Wärmeaustauschanlage und/oder Stoffaustauschanlage durch eine Oxyfluorination modifiziert wird.

Dies ist möglich, da die Oxyfluorination auch bei einem sehr komplexen Einbau einfach zu bewerkstelligen ist.

Auch beim Nachrüsten von bestehenden Anlagen können hierdurch Steigerungen der Betriebseigenschaften möglich sein, die mit herkömmlichen Einbauten nicht erzielbar sind. Weiterhin ist nach Wiederinbetriebnahme sofort die volle Leistung verfügbar, und nicht erst nach einer langen Einlaufzeit. Auch lässt sich hierdurch die Algenproduktion vermindern.

Die dritte Aufgabe wird gelöst durch die Angabe einer Verwendung von Oxyfluorination für eine zumindest teilweise Kunststoff umfassende Oberfläche eines Einbaus welche für einen wärmeaustauschenden Einsatz in einem Feucht-/Nassbereich einer Wärmeaustauschanlage und/oder Stoffaustauschanlage vorgesehen ist und wobei der Einbau in einer Kraftwerksanlage vorgesehen ist, wobei die Oberfläche zur Verbesserung ihrer Benetzbarkeit durch die Oxyfluorination modifiziert wird.

Weitere Merkmale, Eigenschaften und Vorteile der vorliegenden Erfindung ergeben sich aus der nachfolgenden Beschreibung unter Bezugnahme auf die beiliegende Figuren. Darin zeigt schematisch:
- FIG 1: zeigt eine erfindungsgemäße Anlage zur Abscheidung CO₂ mit Absorber/Desorber und Quenchvorrichtung sowie erfindungsgemäßen Einbauten
- FIG 2: schematisch einen erfindungsgemäßen Einbau am Beispiel eines Kühlturms eines solarthermischen Kraftwerks.

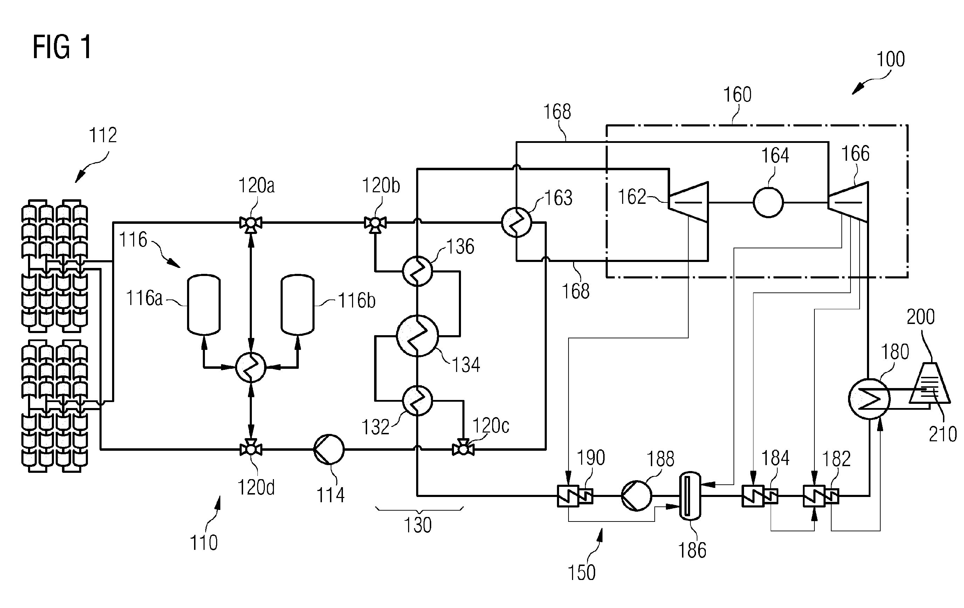

In FIG 1 ist eine Abscheidevorrichtung 1 für Kohlendioxid aus einem Rauchgasstrom gezeigt. Die Abscheidevorrichtung 1 umfasst einen Absorber 3 und einen strömungstechnisch mit diesem verbundenen Desorber 5.

Zur Abscheidung von Kohlendioxid aus dem Rauchgas einer Verbrennungsanlage wird das Rauchgas von einer Verbrennungsanlage 2 in die CO₂- Abscheidevorrichtung 1 weitergeleitet. Hierzu wird das Rauchgas der Quenchvorrichtung 4 über eine Rauchgasleitung 7 zugeführt.

In der Quenchvorrichtung 4 wird das heiße Rauchgas mit einer vergleichsweise großen Menge eines Kühlmediums, vorzugsweise Wasser, in Kontakt gebracht und dabei teilweise oder vollständig kondensiert. Das heiße Gas wird im Gegenstrom oder Mitstrom durch die Quenchvorrichtung 4 geleitet. Das dabei entstehende Quenchkondensat sammelt sich am Quenchboden und ist vielfach hochkorrosiv und angesäuert. Die Quenchvorrichtung 4 weist einen Rauchgasauslass 6 auf, bei dem das gekühlte und teilgereinigte Rauchgas wieder austritt und an den Absorber 3 weitergeleitet wird. Das Kühlmedium der Quenchvorrichtung 4 kann eine wässrige Lösung einer Aminosäure sein, deren pH-Wert durch geeignete Zugabe etwa von Kaliumhydroxid auf einen Wert von 10 bis 13 eingestellt wurde. Die CO₂-Wäsche findet in einem Absorber statt, wobei die chemische Absorption mittels eines Waschmittels, insbesondere Monoethanolamin (MEA), aber auch Diethanolamin (DEA) oder Methyldiethanolamin (MDEA), erfolgt. Das mit CO₂ beladene Waschmittel wird in einem Desorber von dem CO₂ befreit und aufbereitet und anschließend im Kreislauf zum Absorber zurückgeführt. Dabei weisen der Absorber 3, der Desorber 5 und die Quenchvorrichtung 4 erfindungsgemäße Einbauten 220 und 230 auf, welche später noch genauer beschrieben werden.

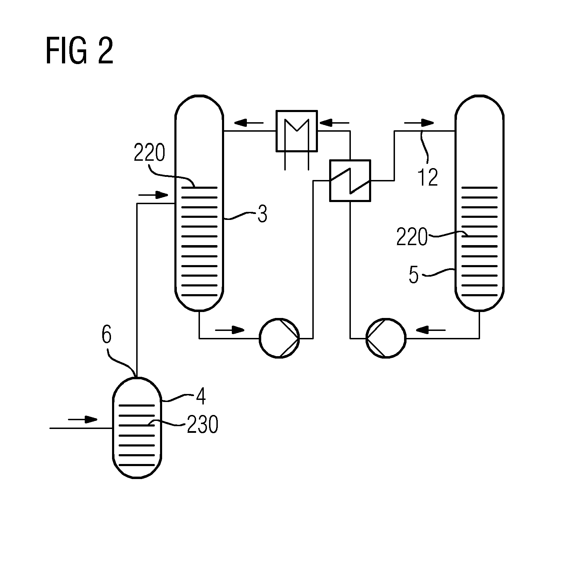

FIG 2 zeigt ein Schaltbild für ein solarthermisches Kraftwerk 100, welches einen mit einem Wärmeträgermedium arbeitenden Primärkreis 110 und einen mit einem Arbeitsmedium arbeitenden Sekundärkreis 150 aufweist. Der Primärkreis 110 und der Sekundärkreis 150 sind über eine Wärmetauschergruppe 130 thermisch miteinander gekoppelt. Wie aus Figur 1 ersichtlich, weist die Wärmetauschergruppe 130 drei Wärmetauscher, einen Vorwärmer 132, einen Verdampfer 134 und einen Überhitzer 136, auf. Es wird darauf hingewiesen, dass der dargestellte Aufbau der Wärmetauschergruppe 130 lediglich ein typisches Beispiel darstellt. Die Wärmetauschergruppe kann selbstverständlich auch auf andere Weise als hier konkret dargestellt, realisiert werden.

Der Primärkreis 110 weist ein Solarfeld 112 auf, mit dem die elektromagnetische Strahlung der Sonne aufgenommen und als Wärme an das Wärmeträgermedium übergeben wird. Wie bereits oben erwähnt, kann das Solarfeld 112 Parabol-Rinnen-Kollektoren, Fresnel-Kollektoren und/oder einen Solarturm aufweisen, mit denen die Sonnenenergie auf effiziente Weise in den Primärkreis eingespeist werden kann.

Der Primärkreis 110 weist ferner eine Pumpe 114 auf, welche für eine geeignete Zirkulation des Wärmeträgermediums in den Leitungen des Primärkreises 110 sorgt. Gemäß dem hier dargestellten Ausführungsbeispiel ist ferner ein Speichersystem 116 vorgesehen, welches einen ersten Speichertank 116a und einen zweiten Speichertank 116b aufweist. Mittels eines Wärmetauschers 118 und zwei Drei-Wege-Ventilen 120a und 120d kann dem Speichersystem 116 eine bestimmte Menge an Wärmeträgermedium zugeführt bzw. abgeführt werden. Ferner sind zwei Drei-Wege-Ventile 120b und 120c vorgesehen, mit denen der Volumenstrom des Wärmeträgermediums zwischen der Wärmetauschergruppe 130 und einer über einen Wärmetauscher 163 verlaufenden Teilstrom-Leitung verteilt werden kann.

Es wird darauf hingewiesen, dass der Wärmetauscher 118 dann erforderlich ist, wenn das Medium in den Speichertanks 116a, 116b nicht gleich dem Arbeitsmedium in dem Solarfeld 112 ist. So kann das Arbeitsmedium des Solarfeldes 112 beispielsweise Öl sein, wohingegen das Medium in den Speichertanks 116a, 116b Salz ist. Damit kann dann Wärme an die Speicher 116a, 116b bzw. von den Speichern 116a, 116b übertragen werden. Im Falle der Verwendung von Salz als Arbeitsmedium für das Solarfeld 112 wäre der Wärmetauscher 118 dann nicht unbedingt erforderlich.

Der Sekundärkreis 150 des Kraftwerks 100 weist ein Turbinensystem 160 auf. Gemäß dem hier dargestellten Ausführungsbeispiel umfasst das Turbinensystem 160 eine Hochdruck-Dampfturbine 162, einen Generator 164 und eine Niederdruck-Dampfturbine 166. Über eine Leitung 168 wird das aus der Hochdruck-Dampfturbine 162 austretende Arbeitsmedium über den bereits zuvor erwähnten Wärmetauscher der Niederdruck-Dampfturbine 166 zugeführt. Gemäß dem hier dargestellten Ausführungsbeispiel ist das Arbeitsmedium Wasser bzw. Wasserdampf. Das Arbeitsmedium Wasser wird in diesem Dokument auch als Speisewasser bezeichnet.

Der in dem Turbinensystem 160 entspannte Dampf wird mittels Kondensator 180 und einem Kühlkreislauf mit einem Kühlturm 200 kondensiert. Dabei weist der Kühlturm 200 eine Wärmeaustauschanlage mit den erfindungsgemäßen Einbauten 210 auf. Diese werden später noch genauer beschrieben. Dem Kondensator 180 nachgeschaltet sind zwei Mischeinheiten 182 und 184, in denen von der Niederdruck-Dampfturbine 166 abgezapfter Wasserdampf über verschiedene Verbindungsleitungen mit dem kondensierten Wasserdampf (nunmehr Wasser) vermischt wird. Ferner weist auch der Sekundärkreis 150 einen Speicherbehälter 186 auf. In Verbindung mit dem Arbeitsmedium Wasser wird dieser auch als Speisewassertank 186 bezeichnet.

Eine Pumpe 188 sorgt für eine Zirkulation des Wasserdampfes bzw. des kondensierten Wassers in dem Sekundärkreis. Der Pumpe 188 nachgeschaltet ist eine Arbeitsmedium-Vorwärmvorrichtung 190, in der von der Hochdruck-Dampfturbine 162 abgezapfter Wasserdampf mit dem von der Pumpe 188 geförderten Wasser vermischt wird und so die Speisewasser-Endtemperatur angehoben wird, bevor das Speisewasser bzw. das Wasser in die Wärmetauschergruppe 130 tritt.

In Wärmekraftwerken wird die bei der Energieerzeugung anfallende Abwärme über Kühltürme 200 abgeleitet. Im Inneren des Kühlturms 200 befinden sich im unteren Bereich die Einbauten 210, die dem Wärmeaustausch dienen und in ihrer Funktion unter Ausnutzung des natürlichen Auftriebs in Verbindung mit eintretender Frischluft die Abkühlung des Wassers bewirken, das zur Kühlung der Kondensatoren dient, in denen Dampf zu Wasser niedergeschlagen wird.

Diese Einbauten 210, 220,230 sind aus Kunststoff. Hierbei wird insbesondere das PVC verwendet. Einbauten 210,220,230, insbesondere Einbauten aus PVC, entfalten ihre vollen thermischen Eigenschaften erst nach einer Einlaufzeit von ca. 2-3 Monaten. Dies ist beispielsweise bedingt durch einen Reinigungseffekt, bei welchem durch den Fertigungsprozess bedingt vorhandene Rückstände in dem neuen Einbau entfernt werden (z.B. Fette). Auch kann dies beispielsweise durch eine Belagbildung bedingt sein. Auch andere Gründe können möglich sein. Bisher wurden die Einbauten 210,220,230 daher einer sogenannten Einlaufzeit unterzogen, welche jedoch kostenintensiv und zeitintensiv ist. Erfindungsgemäß werden die Oberflächen der Einbauten 210,220,230 nun zumindest teilweise durch Oxyfluorination verändert, so dass die Benetzbarkeit verbessert wird. In fluorhaltiger Atmosphäre findet ein Austausch von Atomen statt. Dabei werden Wasserstoffatome im Kunststoff durch Fluor und teilweise auch durch Sauerstoffatome ersetzt.

Die Oberfläche erhält durch diese Behandlung neue Eigenschaften, die sich auf die Benetzungsfähigkeit des Einbaus 210 positiv bzw. verbessernd auswirken. Erfindungsgemäß ist nun nicht eine Diffusionsdichtheit, sondern die Veränderung der Oberflächenspannung bei den Einbauten 210,220,230 ausschlaggebend. Durch die erfindungsgemäßen Einbauten 210,220,230 ist nun keine Einlaufzeit mehr notwendig. Somit ist nach einer Inbetriebnahme bzw. Wiederinbetriebnahme sofort die volle Leistung verfügbar, und nicht erst nach der Einlaufzeit.

Zudem sind die thermodynamischen Eigenschaften des Einbaus 210 gegenüber herkömmlich gealterten Einbauten des Stands der Technik nachhaltig verbessert. Hier zeigt sich eine deutlich verbesserte thermische Performance, also eine deutlich verbesserte Betriebseigenschaft, gegenüber einem fabrikneuen Einbau. Hierdurch sind enorme Kostenvorteile spürbar, die von einer Reduzierung des notwendigen Volumens des Einbaus bis hin zur Baugrößenreduzierung von Kühltürmen 200 reichen können. Insbesondere bei Naturzugkühltürmen sind hierdurch - durch die damit verbundene Verkleinerung des Einbaus 210 - enorme Kostenreduktionen möglich. Beim Umbau oder Nachrüsten (Retrofit) von bestehenden Anlagen können hierdurch Steigerungen der Performance verbunden sein, die mit herkömmlichen Einbauten des Stands der Technik nicht erzielbar sind.

Durch den erfindungsgemäßen Einbau 210,220,230 ergeben sich zudem auch Vorteile hinsichtlich der Fahrweisen bzw. Langzeitperformance (Degradation). Ein weiterer Vorteil ist, dass die chemische bzw. biologische Belagbildung, beispielsweise Algen, aufgrund der veränderten Oberfläche reduziert wird. Selbstverständlich kann die gesamte Wärmeaustauschanlage und/oder Stoffaustauschanlage mit solchen Einbauten 210,220,230 ausgestaltet sein.

Natürlich kann der erfindungsgemäße Einbau 210,220,230 nicht nur im Kühlturmbau 200,im Absorber 3/Desorber 5 oder in der Quenchvorrichtung 4, sondern auch in anderen Wärme-/Stoffaustauschanlagen eingesetzt werden, in denen Wärme-/Stoffaustauschkolonnen mit Kunststoffeinbauten oder Schüttungen benötigt und verwendet werden.

## Patentansprüche

1. Einbau (210,220,230) für den Einsatz in einem Feucht-/Nassbereich einer Wärmeaustauschanlage und/oder einer Stoffaustauschanlage, umfassend eine Oberfläche, wobei zumindest die Oberfläche zumindest teilweise Kunststoff umfasst und wobei der Einbau (210, 220,230) in einer Kraftwerksanlage vorgesehen ist,
**dadurch gekennzeichnet, dass** die Oberfläche zumindest teilweise durch Oxyfluorination verändert ist, so dass ihre Benetzbarkeit verbessert ist.

2. Einbau (210,220,230) nach Anspruch 1,
**dadurch gekennzeichnet, dass** der Einbau (210,220,230) von einer Flüssigkeit umströmbar ist.

3. Einbau (210) nach einem der vorhergehenden Ansprüche,
**dadurch gekennzeichnet, dass** der Einbau (210) in einem Kühlturm (200), insbesondere in dem Kühlturm eines Kraftwerks, vorgesehen ist.

4. Einbau (210) nach Anspruch 3,
**dadurch gekennzeichnet, dass** der Kühlturm (200) ein Trockenkühlturm oder Nasskühlturm oder Hybridkühlturm ist.

5. Einbau (220,230) nach Anspruch 1 oder 2,
**dadurch gekennzeichnet, dass** der Einbau (220,230) in einem Absorber und/oder einem Desorber und/oder einer Quenchvorrichtung vorgesehen ist.

6. Einbau (220,230) nach Anspruch 1 oder 2,
**dadurch gekennzeichnet, dass** der Einbau (220,230) in einer Anlage zur CO₂-Abscheidung angeordnet ist.

7. Einbau (210,220,230) nach einem der vorhergehenden Ansprüche,
**dadurch gekennzeichnet, dass** der Kunststoff Polyvinylchlorid (PVC) umfasst.

8. Verfahren zur Herstellung einer zumindest teilweise Kunststoff umfassenden Oberfläche eines Einbaus (210,220,230) für eine Verwendung in einem Feucht-/Nassbereich einer Wärmeaustauschanlage und/oder einer Stoffaustauschanlage, wobei sich der Einbau (210,220,230) in einer Kraftwerksanlage befindet,
**dadurch gekennzeichnet, dass** die Oberfläche vor einer Montage in die Wärmeaustauschanlage und/oder Stoffaustauschanlage oder während des Betriebs der Wärmeaustauschanlage und/oder Stoffaustauschanlage durch eine Oxyfluorination modifiziert wird.

9. Verwendung der Oxyfluorination für eine zumindest teilweise Kunststoff umfassende Oberfläche eines Einbaus (210,220,230), welche für einen wärmeaustauschenden Einsatz in einem Feucht-/Nassbereich einer Wärmeaustauschanlage und/oder Stoffaustauschanlage vorgesehen ist und wobei der Einbau (210,220,230) in einer Kraftwerksanlage vorgesehen ist, wobei die Oberfläche zur Verbesserung ihrer Benetzbarkeit durch die Oxyfluorination modifiziert wird.

10. Verwendung von Oxyfluorination nach Anspruch 9,
**dadurch gekennzeichnet, dass** sich die Wärmeaustauschanlage und/oder Stoffaustauschanlage in einem Kraftwerk befindet.

11. Verwendung der Oxyfluorination nach Anspruch 9 oder 10,
**dadurch gekennzeichnet, dass** die Wärmeaustauschanlage und/oder Stoffaustauschanlage ein Absorber und/oder ein Kühlturm und/oder ein Desorber und/oder eine Quenchvorrichtung ist.

12. Verwendung der Oxyfluorination nach Anspruch 9 oder 10 oder 11,
**dadurch gekennzeichnet, dass** der Kunststoff Polyvinylchlorid (PVC) umfasst.
